# EUROPEAN PATENT SPECIFICATION

(11) **EP 1 517 033 B1**
(45) Date of publication and mention of the grant of the patent: **01.05.2013**
(21) Application number: 03020929.0
(22) Date of filing: 16.09.2003
(51) Int. Cl.: F03D 1/00, B08B 1/04, B60S 3/06

(54) **Apparatus for cleaning oblong objects**
Vorrichtung zur Reinigung länglicher Objekte
Dispositif pour le nettoyage des objets oblongs

(43) Date of publication of application: 23.03.2005
(73) Proprietor: AH Industries A/S, 6091 Bjert (DK)
(72) Inventor: Sorensen, Bjarne Norgaard, 5592 Ejby (DK)
(74) Representative: Tellefsen, Jens J.

(56) References cited:
- WO-A-03/048569
- GB-A- 767 454
- JP-A- 57 033 099
- US-A- 1 827 887
- US-A- 3 601 832
- US-A- 3 755 844
- US-A- 3 798 696
- US-A- 3 942 207
- US-A- 4 668 301
- US-A- 4 809 392

## Description

The present invention relates to an apparatus for cleaning oblong objects. Within the present application the term "oblong objects" shall be construed as comprising for example wind turbine blades, road signs or markers, billboards, masts or the like, which are difficult to clean.

Although the majority of applications as described below will relate to wind turbine blades, the apparatus is suitable and advantageous for cleaning other items, where similar problems may arise and where similar advantages may be achieved.

The blades of wind turbines are designed to have an optimum aerodynamic shape and an especially smooth surface such that the wind resistance during the turning movement of the wind turbine blade will be as low as possible. The energy which is lost due to additional drag by irregularities, unevenness or dirt on the blade may be quite considerable and therefore have a substantial economic effect on the overall performance of the device.

In order to maintain the optimum performance, it has recently been realised that it may be advantageous to clean the turbine blades at regular intervals in order to maintain a substantially uniform performance of the wind turbine.

Depending of the environment into which the wind turbine is placed, the efficiency loss will vary. Typically, sea based wind turbines will have an agglomeration of salt and bird excrements which will cause a performance loss of between 5 and 10 %. For land based turbines, the agglomeration of insects, bird excrements, fungus, dust, sand and the like may account for up to a 20 % or more production loss.

Therefore, attempts have been made to clean the turbine blades, either by applying a special coating containing a Teflon® derivative, whereby the surface of the turbine blade should be automatically cleaned during for example rainy weather as it is difficult for particles to attach themselves to a Teflon® treated surface. Usually, the Teflon® treatment or other low friction treatments are polymer based, whereby the effect of the surface layer/coating will deteriorate rapidly when exposed to sunlight, as the ultraviolet rays in the sunlight as well as other climatic factors will deteriorate the surface coating.

A known device is described in WO 03048569 which describes a method and apparatus for treatment of a surface of a rotor blade of a wind mill where the apparatus is placed in such a manner that it is movable in relation to the surface of a rotor blade, and where the apparatus is caused to move depending on a form of treatment determined by a means of treatment mounted on, in or next to the apparatus. In this manner various forms of treatment of the rotor blade may be carried out such as e.g. washing, finishing, sealing etc. The device, however, uses two main brushes, but does not disclose any specific details relating to the construction of the device apart from the provision of an encapsulation which will make it possible to operate the device even under special weather conditions.

Experiments have also been carried out whereby high pressure water jets have been installed in telescopic arrangements such that when the wind turbine is standing still in its locked position, the nozzles can be extended along the leading edge of the turbine blade and high pressure water jets may flush the blades. This may give rise to several disadvantages in that the pressure in the water jets must be sufficiently high in order to remove dust, fungus and other residue which may be firmly attached to the blade due to the grease and grime in the air. Water jets at this high pressure may cause erosion at the surface of the blade, which is typically made from gel coat or the like, such that areas of the blade may be excessively worn, whereby the overall performance and the strength of the blade rapidly deteriorates and the overall life of the blade may be greatly reduced.

Furthermore, the high pressure jets, especially during windy conditions, spread its spray over a rather large area in the vicinity of the turbine. This may give rise to environmental complaints, either due to admixtures added to the washing liquid, such as detergents, soap or the like, which may be undesirable for the immediate environment, or for neighbours living in the immediate vicinity of the wind turbine.

A third method for cleaning the wind turbine blades is by manual labour. This method may be very effective, as it is possible to efficiently clean the surface of the blade and reapply wax layers in an environmentally friendly way. The disadvantage of this method is that it is very labour intensive and requires a substantial amount of equipment in order to bring the man power up to a sufficient height in order to be able to treat the entire wind turbine blade. Modem wind turbine blades are usually up to 60-90 meters, which requires substantial lifting equipment. This is further aggravated when the cleaning has to take place on sea based wind turbines where the sea conditions may be unfavourable.

Furthermore, in order to carry out the process, the down time of the wind turbine is approximately 16 hours which may account to a substantial loss of production from that particular wind turbine. A further disadvantage with the manual labour is that wind turbines or wind turbine farms are often placed in remote areas or in the sea, such that logistics both with respect to manpower and equipment may be quite labour-some and under any circumstances quite time consuming.

Consequently, there is a need for a method for the cleaning of oblong objects, in particular wind turbine blades, where the method and the apparatus used for the cleaning of oblong objects provide a fast, efficient and environmentally friendly cleaning process, such that the disadvantages for the up-till now methods may be alleviated.

This problem is solved by the present invention by an apparatus for the cleaning of oblong objects wherein the apparatus comprises two spaced apart main brush devices, between which main brush devices a washing zone is defined, where each brush device is substantially cylindrical in shape having a longitudinal axis, and being rotatable about said longitudinal axis, and further that each brush device is attached at least in one end to an intermediate frame, and that the attachment comprises a hinge means allowing the brush device to pivot in a first plane, and pivot control means comprising an actuator in such a manner that the relative angle between the longitudinal axis of the two brush devices is adjusted, and that the distance between the two brush devices is adjusted by sliding movement initiated by a second actuator means attached to the intermediate frame, and that said intermediate frame is attached to a main frame, said main frame comprising means for being attached to a lifting means.

In comparison to the prior art devices and methods as mentioned above, the present apparatus is so versatile that it can be adjusted during the washing process such that any cross-section may be cleaned. The cross-section of a wind turbine's blade is usually comparable to the cross-section to an airplane wing, i.e. there is an aerodynamic design in order to maximise the energy output to the wind turbine's generator. This in turn requires that the apparatus for cleaning such a wing efficiently can clean all the surfaces reliably such that the original design characteristics of the blade may be maintained.

Furthermore, the technique of using rotating brushes as for example is used in many traditional car wash installations is a well-proven technique which does not even by repeated processes damage the surface, and furthermore, the quality of the cleaning process is well-established.

The actuators built into the apparatus makes it possible for the operator or for computer-means to adjust the main brushes such that the washing zones may be defined in an optimum way in relation to the object being cleaned, for example the blade of the wind turbine.

Even though the wind turbines are increasingly growing in size by providing means for attaching the main frame and thereby the apparatus to a lifting means the tower of the wind turbine may be used as crane such that a wire system can be attached to the tower, for example the nacelle whereby the entire apparatus by means provided on the apparatus may be advanced along the object being washed for example the blade of a turbine. Alternatively, the apparatus may be arranged in connection with a crane, for example a mobile crane either by a comparable attachment system comprising wires and tackles as is the case when the tower of the wind turbine is used or the apparatus may be attached directly to the boom of the crane whereby a more stable guidance of the apparatus may be achieved. This is especially important when operating under conditions where strong winds may occur in that when suspending the apparatus in a wire and tackle system the apparatus may be influenced by wind to such a degree that safe operation cannot be achieved. Tests have shown that the apparatus in a wire suspension can be operated in wind speeds up to about 12 meters per second.

In a further embodiment the apparatus is provided with one or more guide rollers arranged between the two main brushes adjacent the intermediate frame, where the guide rollers may rotate about an axis arranged in the same plane as the first pivot plane of the main brushes.

The guide rollers serve to guide the entire apparatus in relation to the object to be cleaned. When the apparatus is designed for cleaning wind turbine blades, the guide rollers will usually be shaped such that a firm and reliable contact with an edge of the wind turbine blade can be achieved whereby the guidance of the two main brushes in relation to the washing zone can be optimized.

In a further advantageous embodiment, one or more secondary brushes are arranged adjacent the intermediate frame between the two main brushes, and that the secondary brushes may rotate about an axis arranged in the same plane as the first pivot plane of the main brushes but substantially perpendicular to said main brushes.

With this embodiment is achieved that for objects having a relatively longer extension in the direction of the main brushes in comparison in particular to the main brushes, these secondary brushes may clean the shorter size of an elongated object in the washing zone. For wind turbines, the guide rollers as well as the secondary brushes may be arranged to treat the leading edge, i.e. that edge of the wind turbine blade which is foremost in the direction of rotation. In this manner, for example a wind turbine blade may be cleaned in one operation.

In a further advantageous embodiment, the apparatus has parallel to the longitudinal axis of each main brush a beam member arranged, said beam member extending substantially along the main brush, and that one or more sensor means are arranged along each beam member for registering the distance between the beam member and an object to be cleaned arranged between the two main brushes.

In this manner by continuously registering the distance between the brush and the object to be cleaned, the cleaning process can be optimized. This is especially important when cleaning oblong objects which in a direction perpendicular to the brush longitudinal axis have a varying cross-section. This is for example the case with blades of wind turbines which typically have a very slim and narrow profile in one end and closer to the front has a more bulky profile. By continuously registering the distance between the brush and the object to be cleaned by means of the sensors placed on the beam, the most optimal brush pressure can be adjusted at all times regardless of the cross-section of the item to be cleaned.

In a further advantageous embodiment one or more spray nozzles may be arranged along the main brushes, for example integrated in the brush axle, where the nozzles are suitable for spraying cleaning fluids, insect and/or fungus solvents, hot or cold wax or any other desired sprayable fluid or gas or that one or more spray nozzles may be arranged in or on the beam member, where the nozzles are suitable for spraying cleaning fluids, insect and/or fungus solvents, hot or cold wax or any other desired sprayable fluid or gas.

The nozzles may be provided in the brush axle such that liquid released by the nozzles are transported by the bristles of the brush to the cleaning surface. Alternatively, the nozzles can be arranged in connection with the beam member for example in the embodiment, where such beam members are provided in order for providing the sensing means as mentioned above in another advantageous embodiment, or the beam may be provided especially for the nozzle arrangement.

When the nozzles are arranged in the axle, the beam is not necessary, but on the other hand, it may be advantageous to provide a larger number of nozzles compared to the same arrangements when the nozzles are arranged on the beam, in that the nozzles' spraying angle will be severely diminished by the presence of brushes even though the bristles due to gravity and movement will spread the fluids whether it be cleaning fluids, insects or fungus solvents, wax or any other fluid or gas.

When the nozzles are arranged on the beam, the spray pattern can be very precisely controlled. Also different sets of nozzles especially suitable for different fluids may be provided on the beam, and furthermore, it may be possible easily to replace, clean and otherwise maintain the nozzles if they are not hidden in the axle of the main brushes themselves.

Among the other desired sprayable fluids or gasses which could be contemplated in connection with the present invention without the mentioning/listing of materials is limiting the versatility of the device, should be mentioned different surface treatment such as Teflon®, silicones, spray paint, epoxy, varnishes, water solvent varnishes and the like. All these fluids can be applied to the newly cleaned surface in order to bring about characteristics or enhanced characteristics which are more desirable.

A Teflon® coating may for example provide a low friction surface whereby pollution may have difficulty to attach itself.

When applying varnishes, a deteriorated surface may be recreated or reconditioned. This can for example be advantageous when billboard signs or the like are cleaned also for example in combination with a Teflon® or silicone treatment, such that the surface friction is reduced. These are a few of the possibilities which are available for a user of an apparatus for cleaning oblong objects, according to the invention.

In a further advantageous embodiment the beam member may be provided with a rail, and one or more spray nozzles and/or a sensor means for example a photo-, ultrasound-, and/or infrared sensor is provided immediately adjacent the nozzle on a satellite, and that said satellite may move along the rail.

Instead or in addition to the spraying nozzles being arranged on the beam, an arrangement where the nozzles are arranged to be either alone or in combination with sensor means on a satellite, is facilitated, the possibility of varying the amount of cleaning fluids, wax or the like in different zones on the object to be cleaned. Furthermore, by providing adequate sensor means, the surface during treatment may be controlled or inspected, for example by providing video camera means as well as it might be controlled that the correct amount of fluid is applied to the surface to be cleaned.

This embodiment thereby provides an added level of quality control, and at the same time the possibility of real-time optical inspection of the item to be cleaned which may otherwise be rather difficult to achieve especially when objects that are difficult to reach are in question.

Furthermore, the sensor means whether it be optical, photo, infrared or ultrasound means may be coupled to a computer which by means of adequate software will be able to automatically detect and map out areas where special attention is needed for example on-site manual inspection due to pre-programmed conditions.

Returning again to the question of blades for wind turbines, the surfaces are usually smooth and unitarily coloured. The sensing means may be able to detect voids for example by ultrasound means, cracks and flaking or other surface deterioration by video. Has the surface usually a uniform appearance it will be a relatively simple software package which is needed in order to signal deficiencies such as cracking, flaking and the like. Hereby the routine cleaning of the object will also be a routine inspection at a much improved level compared to the traditional inspection of the wind turbine.

In a further advantageous embodiment a guide wheel is provided adjustably connected by means of wheel bearings and a fork to each main brush, said guide wheel can by means of one or more actuators be manipulated to engage an object to be cleaned positioned between the two main brushes, at any distance relative to the longitudinal axis of the main brush.

The guide wheels are provided in order to assist the actuating means on the immediate mainframe, such that the brushes when they reach a certain size and in situations where they also may be influenced by wind or the like, assist in maintaining the correct distance between the object to be cleaned and the brushes such that the optimum cleaning process in the washing zone may be maintained. Furthermore, the guide wheels also provide a much improved stabilized and easier controlled travel of the apparatus along the object to be cleaned.

In a still further advantageous embodiment, the main brushes and the intermediate frame may be arranged on a chassis, and that the chassis further comprises a shield for each main brush suitable for covering a substantial part of said main brush, especially the sections of the brushes facing away from the washing zone.

Depending on the fluid which is applied to the object to be cleaned, the rotating brush action may create an undesirable spray which may be spread to the adjacent environment by wind or the like. It is therefore desirable to encapsulate the washing zone as much as possible, for example by providing the shield covering a substantial part of the circumference of the brushes without hampering the actual cleaning process and without endangering the object to be cleaned in such a way that the shields may scratch or in any other way touch the object to be cleaned.

Additionally the shields may be provided with ventilating means and optionally drain means are provided in the shields, for venting and draining off any surplus liquid and/or debris and/or gas which during the washing process has become free.

This is an especially advantageous embodiment in that the fluids used during the process even though they may be chosen as environmentally friendly and bio-degradable fluids often may cause inconvenience to the immediate environment due to the spraying or the like.

Furthermore, by being able to collect and to a certain extent reuse the collected fluids, the amount of fluid which needs to be brought to the cleaning site may be minimized. This is a very important aspect in that for structures which are based at sea or in deserted mountain regions, the supply i.e. transport of fluids whether it be water, detergent, solvents or the like, may cause substantial economic cost to the entire cleaning process.

Furthermore, the logistics may be substantially simplified when the amount of fluids needed, can be minimized. Also by actively creating a lower pressure inside the shields, i.e. in the washing zone, the impact on the surrounding environment may be minimized whereby it will become possible to clean objects with this method in densely populated areas without any or only a minimum impact on the surrounding environment.

It should also in this connection be mentioned, that even though environmentally friendly fluids and bio-degradable fluids are used, the debris, dirt, grime and other pollutants which may be loosened during the cleaning process may advantageously be collected in such a manner that safe disposal can be provided.

In a further advantageous embodiment, the power for activating the different devices comprised in the apparatus is provided as hydraulic pressure and/or electrical current and/or pneumatic pressure, and that a power plant comprising necessary power converters may optionally be provided in the apparatus.

This is especially important when operating in remote areas such as at sea and in the mountains where onsite power supply cannot be provided. By providing the apparatus with a power plant and any desirable power converter in order to convert the output of the power plant to any of the traditional sources such as hydraulic pressure, electrical current or pneumatic pressure, the producer of the apparatus is free to use activators and motors which are most suited for the task without regard to the source of power, as the apparatus may be able to provide any source of power.

Also in a further advantageous embodiment the guiding and sensing means, the nozzles, and actuators as well as drive motors of the brushes may be controlled by remote wire and/or wireless means, or as a combination of automatic predetermined computer controlled instructions, for example by means of a PLC unit in combination with manually controls.

When a reliable computer program is connected to the sensing and controlling means, it may be possible to utilize the apparatus and thereby carry out the entire cleaning process without any manual input. On the other hand a joystick could be provided for operating and controlling the brushes as well as the lifting mechanism used in order for the apparatus to travel along the object to be cleaned. However, in order to utilize the input from the sensor, the pre-programmed PLC may be provided, optionally connected to a computer for instant real time read-out, storage or on-side programming of varying limit values, pressures and the like may be provided.

As mentioned above, the sensors make it possible to retrieve and store information on other subjects than the cleaning process only. Hereby, is it desirable to couple the wireless operation of the device together with the computer, such that the collected information may be handled in a systematic way in order to operate a quality control program.

In a further advantageous embodiment, the apparatus is constructed such that each main brush is between 1000 mm and 5000 mm, more preferred between 2500 mm and 4000 mm and most preferred 3500 mm long in the longitudinal direction and has a diameter between 200 mm and 1000 mm, more preferred 400 mm and 800 mm and most preferred 500 mm to 700 mm, and that each brush is connected via a gear drive to a motor means, for example a hydraulically, pneumatically or electrically driven motor, and that the axle of each brush is pivotably fastened in a guide member to the intermediate frame, for manipulation in one plane and where an actuator means is provided for each axle in order to pivot the axel in the one plane relative to the intermediate frame, and further that the guide member may slide in relation to the intermediate frame in a direction substantially perpendicular to the axle of the main brush, where said sliding is controlled by a second actuator means.

This apparatus is especially suitable for cleaning wind turbine blades in that the dimensions will create a cleaning process where the brushes only will have to travel along the blades once in order to provide the necessary cleaning or any other suitable treatment as discussed above and possibly more times in order to apply other desirable substances such as insect, tolerance and finishing wax treatment or any other treatment as mentioned above.

A problem arising when using the apparatus is that as the brushes are adjusted in order to create a washing zone between the two main brushes, the entire brush devices may be slid along the rails perpendicular to the longitudinal axis of the brush devices. Hereby, may be created an unbalance in the device which is undesirable. The guide wheels, as described above, will help to alleviate a part of this unbalanced load, but it may also be undesirable to induce too high a pressure on the wheels in that they may exert such a force on the surface of the oblong object to be cleaned that damage may occur.

In order to counter this, the apparatus may be provided with a counter-balance system. This counter-balance system may for example be a liquid system where a gyroscopic means or other suitable sensor means is coupled to a pump means such that liquid from the storage containers placed on the platform may be changed from one container to the other, in order to compensate for the unbalance due to the sliding movement of the main brushes in response to the registered unbalanced input from the gyroscopic means. Alternatively or in addition to this system, the gyroscopic balance registering means may be coupled to a weight shifting device. For this purpose, a rail arranged perpendicularly to the longitudinal axis of the main brushes for example below the intermediate frame is provided. A movable weight for example connected by wires to an electrical motor is suspended from the rail such that by pulling in the wires, the weight will be moved back and forth along the rail and thereby compensate for the shifting weight distribution of the main brushes due to the sliding along the rails attached to the intermediate frame.

In a further advantageous embodiment, the apparatus may be provided with a collecting and/or recycling and/or regenerating and/or waste quality grading/sorting system provided for reconditioning and/or reusing of the fluids or gasses collected during the washing process, is provided.

As stated above, this system can minimize the often costly supply of fluids for the cleaning process and furthermore improve the overall economic performance of the apparatus.

The invention will now be explained with reference to the accompanying drawing wherein
- Fig. 1: schematically illustrates a basic embodiment of the apparatus,
- Fig. 2: illustrates an embodiment comprising a beam member,
- Fig. 3: illustrates another embodiment comprising a beam member,
- Fig. 4: is an isometric of a further embodiment,
- Fig. 5: is a side view of the embodiment according to fig. 4,
- Fig. 6: is a plan view of the embodiment of fig. 4,
- Fig. 7: is a side view of an embodiment where a counter-balance system is installed, and
- Fig. 8: is a detailed view of the counter-balance system.

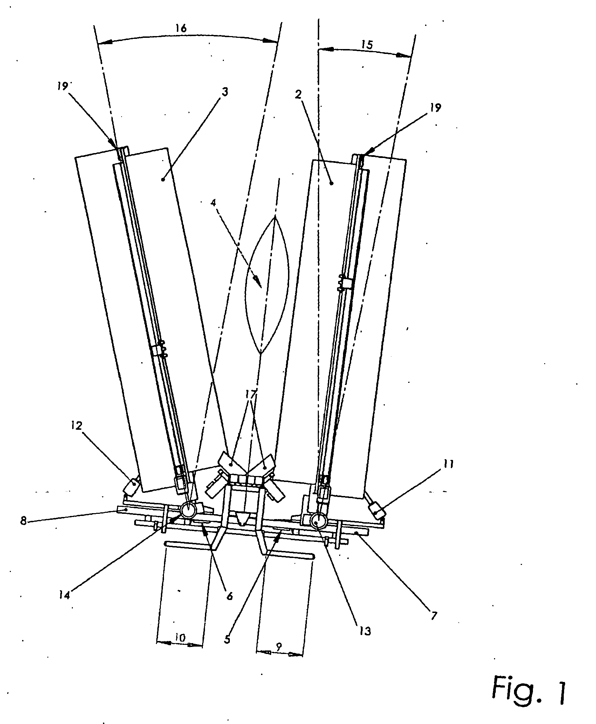

A very basic and schematic embodiment of the invention is illustrated in fig. 1. The apparatus 1 in this embodiment comprises two main brushes 2,3 which are arranged in a substantial parallel relationship. Between the two brushes is the washing zone 4 into which the object to be cleaned shall be arranged. By causing the brushes 2,3 to rotate, an object placed in washing zone 4 will by action of the brushes be cleaned.

When having to treat certain objects having a non-uniform configuration such as blades of wind turbines, it is desirable to be able to adjust the distance between the two brushes 2,3 as well as the angle between the two brushes 2,3.

The relative distance between the two main brushes 2,3 may be adjusted by activating the actuators 5,6 whereby the brushes 2,3 are forced to slide along the tracks 7,8 in the direction indicated by the arrows 9,10. Furthermore, in order to activate the largest part of the surface of the brushes 2,3, it might be advantageous to be able to change the mutual angle between the two brushes 2,3. This is done by activating the actuators 11,12 whereby the brushes due to the pivoting action about the points 13,14 will move as indicated by the arrows 15,16.

During operation of the apparatus when oblong objects to be cleaned are arranged in the washing zone 4, the objects' longitudinal axis is arranged substantially perpendicular to the pivot plane of the main brushes 2,3.

As this apparatus is intended for cleaning oblong objects, it will need some kind of suspension either from a crane or from the tower itself or from some other lifting device for this cleaning operation.

In order to facilitate that the oblong object is kept in the washing zone 4, guide rollers 17 may be provided. The oblong object which is arranged in the washing zone 4 is brought into contact with guide rollers 17 such that the movement of the apparatus 1 in relation to the object to be cleaned (not shown) is hereby guided by the position of the main brushes 2,3 and the guide rollers 17.

It should be mentioned that in order to illustrate the basic principle of the invention, all necessary power lines, fluid lines, nozzles, auxiliary gauges and valves, suspension means etc. has not been illustrated in the figures.

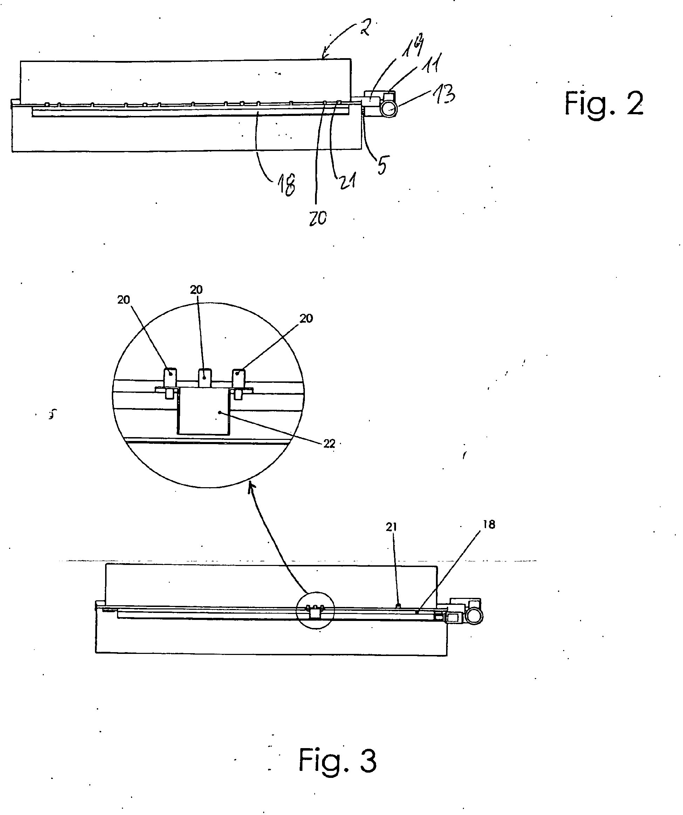

Fig. 2 illustrates an embodiment where a beam 18 is provided in parallel with the axle 19 of the main brush 2. A similar arrangement is provided for the other main brush. The features are given the same reference numbers throughout the figures.

The beam comprises a row of nozzles 20. Nozzles may be suitable for spraying one fluid or may be adapted such that a nozzle comprises two or more spray units whereby different liquids may be sprayed from the same nozzle. This may be necessary where the viscosity of the different fluids or the interaction and/or chemical reaction between two fluids makes it less desirable for these fluids to share the same nozzle. By providing the nozzles 20 at suitable distances along the extend of the brush 2, it is possible to provide a uniform spray pattern such that the liquid applied to the surface of the oblong object can be maintained at a homogenous level.

As the apparatus as depicted in figures 1 and 2 has a uniform length of the main brushes 2,3 it may be desirable in circumstances where objects not having an extend in the washing zone equivalent to the length of the brushes 2,3 to be able to shut off one or more of the nozzles 20 provided in the beam. This may be done for example by installing electrical shut-off valves inside the beam operable independently from the main control console. Hereby, it is possible to further minimize the waste and optimize the cleaning process by only applying fluids where it is desirable.

In addition to the nozzles 20, the beam may be provided with sensor means 21. Sensor means may serve a multitude of purposes. One of the more important purposes may be to sense the distance between the beam and thereby the main brushes and the surface of the oblong object to be cleaned.

Furthermore, the sensors may be provided with ultrasound means for examining the immediate surface layers of the oblong object to be cleaned and/or a video camera device may be provided for visual inspection of the surface. All this information can be used in order to evaluate the condition of the oblong object to be cleaned but also in order to provide information about the cleaning process, i.e. the video recordings might indicate that a polluted area has not been sufficiently cleaned and needs to be redone, or that the solvents used has not sufficiently dissolved in the polluting matter in the surface of the oblong object or the like.

In fig. 3, a further embodiment of the apparatus comprising a beam 18 is illustrated. In this embodiment, the beam 18 comprises sensing means 21 for registration of the distance between the beam and thereby the brush 2 and the oblong object to be cleaned. The spray nozzles and the auxiliary sensing means such as video cameras, ultrasound sensors and the like are arranged in a satellite 22, which may travel along the beam 18 for example by a rail (not shown) such that the movement of the satellite may be remotely controlled.

Alternatively, the satellite can be provided with means such that it will carry out a cyclic movement back and forth along the beam whereby the single nozzle 20 provided in the satellite 22 will provide sufficient fluid to the oblong object for the operation which is required for example cleaning fluids during the cleaning stage, wax during the waxing stage, solvent during the dissolvent of insects and grime and so forth. The photo sensors or video sensing means which may optionally also be provided in the satellite 22 may be equipped in order to carry out the same task as discussed above.

The beam both as illustrated with respect to fig. 2 and fig. 3 may be manoeuvrable together with the axle of the brush such that the axle of the brush 19 and the beam 18 always will be parallel. Alternatively, the beam member 18 may be a fixed construction to the intermediate frame such that the correct distance and thereby the operating pressure of brush 2 on the oblong object to be cleaned is maintained by maintaining different distance parameters for the different sensing means 21 arranged along the beam 18.

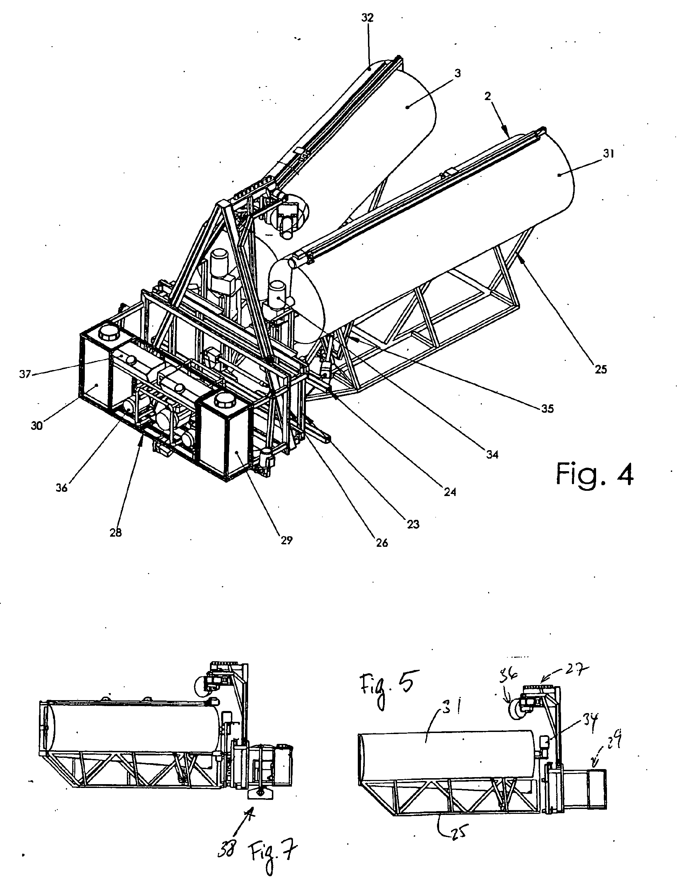

Fig. 4 illustrates a symmetric view of an apparatus 1 according to the invention. The bristles on the brushes 2,3 are not shown, but only the axles 19 are illustrated. The apparatus 1 comprises an intermediate frame 23. On the intermediate frame 23 are provided guide rails 24 along which the main brushes 2,3 may slide substantially perpendicular to their longitudinal direction as indicated in fig. 1 by the arrows 9,10.

Due to the relationship between weight and strength of the materials, the brush constructions 2,3 has in this embodiment been provided with a chassis 25. The chassis 25 serves to strengthen the overall construction and to transfer the load of the brushes, shields etc. 2,3 to the intermediate frame and thereby to the main frame 26.

Furthermore, the chassis serves as a platform for placing the apparatus 1 on the ground. The main frame comprises means for attaching the apparatus to the lifting device in order to bring the apparatus into contact with the oblong object to be cleaned and facilitating the apparatus' travel along the object to be cleaned. For this purposes, attachment means 27 have been provided such that the apparatus 1 can be suspended from a wire- and tackle system for example from the top of the wind turbine. In order to achieve the correct balance such that the brushes are substantially horizontal in operation, the attachment means 27 may be provided with more attachment points such that a substantially level brush configuration may be achieved.

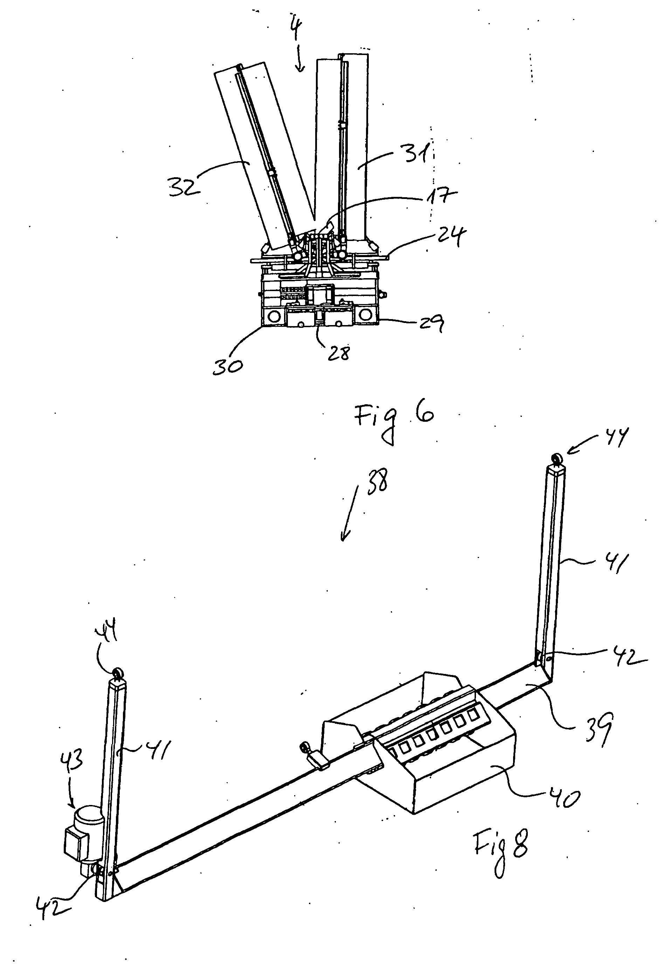

In a further preferred embodiment, see figs. 7 and 8, the apparatus is provided with a counter-balance system, where the system comprises means for registering unbalance and where said system either comprises a rail provided substantially perpendicular to the longitudinal axis of the main brushes, and that a weight member is controllably slidable along said rail or that a liquid pump for pumping liquid between containers or tanks provided on the main frame in response to an unbalance in the apparatus is provided.

On the main frame 26, a platform 28 is provided, such that a maintenance crew, repair crew or the like may be able to work on the apparatus 1. Furthermore, two storage tanks 29 are illustrated which may serve as balance tanks in order to help balance the apparatus 1 such that the cleaning brushes are kept substantially horizontal. The two storage tanks 29 may also be coupled to a pump device and a gyroscopic balance device or other means for detecting unbalance (not illustrated) such that any unbalance occurring due to the horizontal movement of the brushes may be counter-balanced by pumping liquid from one tank to the other and vice versa.

The main frame and the platform 28 are also suitable for arranging the power pack 36 as illustrated in fig. 4. The power pack 36 may be a generator driven by fuels such as diesel or petrol stored in suitable tanks 37.

The counter-balance system 38 as illustrated in fig. 7 is in this embodiment arranged in connection with the main frame. The system could likewise be arranged as part of the intermediate frame depending on the size of the brushes. For a more detailed description of the counter-balance system 38, reference will be made to fig. 8 wherein one embodiment of the counter-balance system as such is illustrated.

The system 38 comprises a main rail 39 along which a weight member 40 may be slid in order to counter any unbalances arising from the horizontal sliding movement of the main brushes. The main rail 39 is in this embodiment pivotly suspended from the main platform by arms 41. The pivotal suspension serves to counter tilting of the apparatus in the direction perpendicular to the main rail. A wire system (not illustrated) is attached to the weight 40 and rollers 42 such that by activating the motor means 43, the movable weight 40 can slide along the rail 39 and thereby change the balance of the main platform and thereby the main brushes in response to the horizontal operation of the main brushes. In the illustrated embodiment, the pivotal suspension of the main rail 39 in the arms 41 is achieved by eye members 44 which may be fitted on axles provided on the main frame 28.

The weight member 40 is in this embodiment illustrated as an empty box into which one or more weights can be placed according to circumstances. It may be advantageous to be able to adjust the counter weights in accordance with the task at hand. When later wind turbines are to be cleaned, special situations arise in that one side of the blade is usually flat whereas the opposite side is curved such that the brushes will have to have a non-symmetrical relationship whereby an unbalanced operation as described above may occur. In such situations, substantial weights may be required whereas when cleaning other objects, none or very limited weights are necessary in order to counter the unbalance.

Although the sliding of the weight 40 along the rail 39 has been described with respect to a wire system, other systems may also be used without departing from the scope, for example may electric motor driven wheels arranged on the weight box 40 be operated or a telescopic cylinder connected between the arms 41 and the box 40 be operated or any other suitable means.

In order to minimize the spray from the cleaning operations, shields 31, 32 are provided. The shields cover a substantial part of the circumference of the brushes but leave the brushes free in the washing zone 4, such that the shields 31, 32 do not interfere with the cleaning process.

In order to be able to illustrate the construction of the shield, chassis and frames, the arrangements relating to the spray nozzles have been left out of the drawings. The shields may be provided with ventilation means such that when the brushes 2,3 are in their operating position, i.e. an oblong object has been placed in the washing zone, the shields will create a space between the shields 31, 32 wherein due to the ventilating means, an under-pressure will be maintained.

The venting means are provided with filters such that fluids will be siphoned from the ventilating air and may be led to regeneration or reuse in a liquid processing plant not shown but which may be arranged either on the platform 28 or on the ground connected by appropriate pipes/hoses (not illustrated). Furthermore the shields are provided with a gutter 33 into which fluids which in liquid form will follow and drain down the shields are collected and led back to be recycled or reused or disposed of as appropriate. The axles 19 are rotated by a motor means 34.

The actuators necessary in order to manipulate the relative angle between the brushes 2,3 as well as the sliding movement for altering the relative distance between the main brushes 2,3 are not illustrated in this embodiment.

Furthermore the chassis may be provided with guide wheels 35 which may be better seen in fig. 4.

In fig. 5, the apparatus 1 seen from the side is illustrated. The same features are given the same reference numbers and what is especially interesting in fig. 5 is the provision of the secondary brushes.

These brushes are provided in order to provide cleaning capacity in the washing zone in the gap between the two main brushes 2,3, such that for example the leading edge of a wind turbine blade may be cleaned at the same time and during the same operation as the two main side surfaces of the blade. The feature of the secondary brushes is an optional feature which is not always necessary in that by being able to manipulate the actuating means 5,6 in combination with the pivoting actuator means 11,12 whereby the relative distance between the brushes 2,3 and the relative angle between the two brushes may be altered it is possible to substantially clean any surface of an oblong object.

A further embodiment, which is not illustrated in the figures, is the embodiment where the axle 19 of the main brushes 2, 3 is provided with one or more joints. By providing joints in the axle 19, the brush may be given and accurate shape such that when the apparatus is developed for a specific application such as wind turbine blades, the overall performance of the device may be optimized by pre-shaping the brush, such that it will better fit to the shape of the oblong object to be cleaned.

For this purpose, the brush 2,3 may be pieced together of two, three or more sections each separated by a joint where the joint is maintained in line by for example a telescopic arm which may be fastened to the chassis, frame or shield such that the curvature of the brush may be altered during operation. The shields may be altered correspondingly, such that there will be sufficient space inside the shield in order to accommodate the curvature of the brush during operation.

Although the invention has been explained mainly with respect to the use for cleaning blades on a wind turbine, it is equally suitable to use this apparatus for cleaning operations on any type of oblong objects, poles, commercial masts, bill boards etc. The scope of the present invention shall only be limited by the appended claims.

## Claims

1. Apparatus for cleaning oblong objects, in particular wind turbine blades, wherein said apparatus comprises two spaced apart main brush devices (2,3), between which main brush devices (2,3) a washing zone (4) is defined, where each brush device (2,3) is substantially cylindrical in shape having a longitudinal axis, and being rotatable about said longitudinal axis, the apparatus being **characterized in that** each brush device (2,3) is attached in one end to an intermediate frame (23), and that the attachment comprises a hinge means allowing the brush device to pivot in a first plane, and pivot control means comprising an actuator(11,12) in such a manner that the relative angle (15,16) between the longitudinal axis of the two brush devices (2,3) is adjusted, and that the distance between the two brush devices (2,3) is adjusted by sliding movement (9,10) initiated by a second actuator means (5,6) attached to the intermediate frame (23), and that said intermediate frame is attached to a main frame, said main frame (26) comprising means (27) for being attachable to a lifting means.

2. Apparatus according to claim 1, wherein one or more guide rollers (35) are arranged between the two main brushes (2,3) adjacent the intermediate frame (23), where the guide rollers may rotate about an axis arranged in the same plane as the first pivot plane of the main brushes.

3. Apparatus according to claim 1, wherein one or more secondary brushes (17) are arranged adjacent the intermediate frame (23) between the two main brushes (2,3), and that the secondary brushes (17) may rotate about an axis arranged in the same plane as the first pivot plane of the main brushes but substantially perpendicular to said main brushes.

4. Apparatus according to claim 1, wherein parallel to the longitudinal axis of each main brush (2,3) a beam member (18) is arranged, said beam member (18) extending substantially along the main brush(2,3), and that one or more sensor means (21) are arranged along each beam member for registering the distance between the beam member (18) and an object to be cleaned arranged between the two main brushes.

5. Apparatus according to claim 1 or 4, wherein one or more spray nozzles (20) may be arranged along the main brushes (2,3), where the nozzles (20) are suitable for spraying cleaning fluids, insect and/or fungus solvents, hot or cold wax or any other desired sprayable fluid or gas or that one or more spray nozzles (20) may be arranged in or on the beam member (18), where the nozzles (20) are suitable for spraying cleaning fluids, insect and/or fungus solvents, hot or cold wax or any other desired sprayable fluid or gas.

6. Apparatus according to claim 1,4 or 5, wherein the beam member (18) may be provided with a rail, and one or more spray nozzles and/or a sensor means (21) for example a photo, ultrasound, and/or infrared sensor is provided immediately adjacent the nozzle on a satellite (22), and that said satellite may move along the rail.

7. Apparatus according to any preceding claim, wherein a guide wheel (35) is provided adjustably connected by means of wheel bearings and a fork to each main brush (2,3), said guide wheel can by means of one or more actuators be manipulated to engage an object to be cleaned positioned between the two main brushes, at any distance relative to the longitudinal axis of the main brush.

8. Apparatus according to any preceding claim, wherein the main brushes (2,3) and the intermediate frame (23) may be arranged on a chassis (25), and that the chassis (25) further comprises a shield (31,32) for each main brush (2,3) suitable for covering a substantial part of said main brush, especially the sections of the brushes facing away from the washing zone (4).

9. Apparatus according to claim 8, wherein ventilating means and optionally drain means are provided in the shields, for venting and draining off any surplus liquid and/or debris and/or gas which during the washing process has become free.

10. Apparatus according to any preceding claim, wherein power for activating the different devices comprised in the apparatus is provided as hydraulic pressure and/or electrical current and/or pneumatic pressure, and that a power plant (36) comprising necessary power converters may optionally be provided in the apparatus.

11. Apparatus according to any preceding claim, wherein the guiding and sensing means (21,35), the nozzles (20), and actuators (5,6,11,12) as well as drive motors of the brushes may be controlled by remote wire and/or wireless means, or as a combination of automatic predetermined computer controlled instructions, for example by means of a PLC unit in combination with manually controls.

12. Apparatus according to any preceding claim, wherein each main brush is between 1000 mm and 5000 mm, more preferred between 2500 mm and 4000 mm and most preferred 3500 mm long in the longitudinal direction and has a diameter between 200 mm and 1000 mm, more preferred 400 mm and 800 mm and most preferred 500 mm to 700 mm, and that each brush is connected via a gear drive to a motor means, for example a hydraulically, pneumatically or electrically driven motor, and that the axle of each brush is pivotably fastened in a guide member to the intermediate frame, for manipulation in one plane and where an actuator means is provided for each axle in order to pivot the axel in the one plane relative to the intermediate frame, and further that the guide member may slide in relation to the intermediate frame in a direction substantially perpendicular to the axle of the main brush, where said sliding is controlled by a second actuator means.

13. Apparatus according to any preceding claim, wherein a collecting and/or recycling and/or regenerating and/or waste quality grading/sorting system is provided for reconditioning and/or reusing of the fluids or gasses collected during the washing process, is provided.

14. Apparatus according to any preceding claim wherein a counter-balance system (38) is provided where the system comprises means for registering unbalance and where said system either comprises a rail (39) provided substantially perpendicular to the longitudinal axis of the main brushes (2,3), and that a weight member (40) is controllably slidable along said rail (39) or that a liquid pump for pumping liquid between containers or tanks provided on the main frame in response to an unbalance in the apparatus is provided.

## Patentansprüche

1. Vorrichtung zum Reinigen von länglichen Objekten, insbesondere Windturbinenschaufeln, wobei die Vorrichtung zwei beabstandete Hauptbürstengeräte (2, 3) mit einer dazwischen definierten Waschzone (4) umfasst, wobei jedes Bürstengerät (2, 3) eine im wesentlichen zylindrische Form mit einer Längsachse aufweist und rotierbar um die Längsachse ist, wobei die Vorrichtung **dadurch gekennzeichnet ist, dass** jedes Bürstengerät (2, 3) an einem Ende an einem Zwischenrahmen (23) befestigt ist, und dass die Befestigung eine Scharniervorrichtung aufweist, die das Schwenken des Bürstengeräts in einer ersten Ebene ermöglicht, und Schwenksteuerungsmittel, die einen Stellantrieb (11, 12) umfassen, so dass der relative Winkel (15, 16) zwischen den Längsachsen der zwei Bürstengeräte (2, 3) angepasst wird, und dass der Abstand zwischen den zwei Bürstengeräten (2,3) durch eine gleitende, durch einen an dem Zwischenrahmen (23) befestigten zweiten Stellantrieb (5, 6) initiierte Bewegung (9, 10) angepasst wird, und dass der Zwischenrahmen am Hauptrahmen befestigt ist, wobei der Hauptrahmen (26) Mittel (27) zum Ermöglichen einer Befestigung an einer Hebevorrichtung aufweist.

2. Vorrichtung nach Anspruch 1, wobei eine oder mehrere Führungsrolle/n (35) zwischen den zwei Hauptbürsten (2, 3) den Zwischenrahmen (23) benachbart angeordnet ist/sind, wobei die Führungsrollen um eine in derselben Ebene wie der ersten Schwenkebene der Hauptbürsten angordnete Achse rotierbar sind.

3. Vorrichtung nach Anspruch 1, wobei eine oder mehrere sekundäre/n Bürste/n (17) den Zwischenrahmen (23) benachbart zwischen den zwei Hauptbürsten (2, 3) angeordnet ist/sind, und dass die sekundären Bürsten (17) um eine in derselben Ebene wie der ersten Schwenkebene der Hauptbürsten, aber im wesentlichen senkrecht zu den Hauptbürsten angeordnete Achse, rotierbar sind.

4. Vorrichtung nach Anspruch 1, wobei parallel mit der Längsachse der jeweiligen Hauptbürste (2, 3) ein im wesentlichen entlang der Hauptbürste (2, 3) verläufendes Balkenglied (18) angeordnet ist, und dass eine oder mehrere Sensoreinrichtung/en (21) entlang jedem Balkenglied zum Erfassen des Abstandes zwischen dem Balkenglied (18) und einem zwischen den zwei Hauptbürsten angeordneten, zu reinigenden Objekt angeordnet ist/sind.

5. Vorrichtung nach Anspruch 1 oder 4, wobei eine oder mehrere Sprühdüse/n (20) entlang den Hauptbürsten (2, 3) anbringbar ist/sind, wobei die Düsen (20) fiirs Sprühen von Reinigungsfluiden, Insekt- und/oder Pilzlösungsmitteln, heissem oder kaltem Wachs oder igendeiner/irgendeinem anderen beliebigen, sprühbaren Flüssigkeit oder Gas geeignet sind, oder dass eine oder mehrere der Sprühdüsen (20) in oder am Balkenglied (18) angeordnet werden kann/können, wobei die Düsen (20) für das Sprühen von Reinigungsfluiden, Insekt- und/oder Pilzlösungsmitteln, heissem oder kaltem Wachs oder irgendeiner/irgendeinem anderen beliebigen sprühbaren Flüssigkeit oder Gas geeignet sind.

6. Vorrichtung nach Anspruch 1, 4 oder 5, wobei das Balkenglied (18) eine Schiene aufweisen kann, und eine oder mehrere Sprühdüse/n und/oder eine Sensoreinrichtung (21), z.B ein Photo-, Ultraschall- und/oder Infrarotsensor, unmittelbar die Düse benachbart auf einem Satellit (22) angeordnet ist/sind, und dass der Satellit entlang der Schiene beweglich ist.

7. Vorrichtung nach irgendeinem der vorhergehenden Ansprüche, wobei ein Führungsrad (35) angeordnet ist, das durch Radlager und eine Gabel mit jeder Hauptbürste (2, 3) verstellbar verbunden ist, wobei das Führungsrad durch einen oder mehrere Stellantrieb/e zum Eingreifen mit einem zwischen den zwei Hauptbürsten angeordneten, zu reinigenden Objekt in irgendeinem Abstand relativ zu der Längsachse der Hauptbürste manipulierbar ist.

8. Vorrichtung nach irgendeinem der vorhergehenden Ansprüche, wobei die Hauptbürsten (2, 3) und der Zwischenrahmen (23) auf einem Gestell (25) anbringbar sind, und dass das Gestell (25) ferner einen für das Umgeben eines wesentlichen Teils der Hauptbürste, insbesondere die der Waschzone (4) abgewandten Ausschnitte der Bürsten, geeigneten Schirm (31, 32) für jede Hauptbürste (2, 3) aufweist.

9. Vorrichtung nach Anspruch 8, wobei Belüftungsmittel und wahlweise Abfuhreinrichtungen zum Belüften und Abführen von irgendeinem während des Waschvorgangs befreiten Überschussfluid und/oder Schutt und/oder Gas in den Schirmen angeordnet sind.

10. Vorrichtung nach irgendeinem der vorhergehenden Ansprüche, wobei Kraft zum Betätigen der unterschiedlichen, in der Vorrichtung befindlichen Geräte als hydraulischer Druck und/oder elektrischer Strom und/oder pneumatischer Druck bereitgestellt ist, und dass ein die erforderlichen Energiewandler aufweisender Kraftwerk (36) wahlweise in der Vorrichtung angeordnet werden kann.

11. Vorrichtung nach irgendeinem der vorhergehenden Ansprüche, wobei die Führungs- und Sensoreinrichtungen (21, 35), die Düsen (20), und Stellantriebe (5, 6, 11, 12) sowie die Bürstentreibmotoren durch Ferndraht- und/oder drahtfreie Mittel oder als eine Kombination von automatischen, vorbestimmten, rechnergesteuerten Anweisungen, z.B. durch eine PLC-Einheit in Kombination mit manuellen Steuerungen steuerbar sind.

12. Vorrichtung nach irgendeinem der vorhergehenden Ansprüche, wobei die Länge jeder Hauptbürste in der Längsrichtung zwischen 1000 mm und 5000 mm, bevorzugt zwischen 2500 mm und 4000 mm und am meisten bevorzugt 3500 mm beträgt und der Durchmesser zwischen 200 mm und 1000 mm, bevorzugt zwischen 400 mm und 800 mm und am meisten bevorzugt 500 mm bis 700 beträgt, und dass jede Bürste durch einen Zahnantrieb mit einer Motoreneinrichtung, z.B. einem hydraulisch, pneumatisch oder elektrisch getriebenen Motor, verbunden ist, und dass die Achse jeder Bürste zum Manipulieren in einer Ebene in einem Führungsglied an dem Zwischenrahmen schwenkbar befestigt ist, und wobei ein Stellantrieb für jede Achse zum Schwenken der Achse in einer Ebene relativ zum Zwischenrahmen bereitgestellt ist, und ferner dass das Führungsglied relativ zum Zwischenrahmen in einer im wesentlichen senkrecht zur Achse der Hauptbürste stehenden Richtung gleitbar ist, wobei das Gleiten durch zweite Stellantriebsmittel gesteuert wird.

13. Vorrichtung nach irgendeinem der vorhergehenden Ansprüche, wobei ein Einsammlungs- und/oder Recycling- und/oder Wiedergewinnungs- und/oder Abfall-Beschaffenheitsaufteilungs- oder -Sortiersystem für die Aufbereitung und/oder Wiederverwendung von den während des Waschvorgangs eingesammelten Flüssigkeiten und Gasen bereitgestellt ist.

14. Vorrichtung nach irgendeinem der vorhergehenden Ansprüche, wobei ein Gegengewichtssystem (38) bereitgestellt ist, wobei das System Mittel zum Erfassen von Ungleichgewicht umfasst, und wobei das System entweder eine im wesentlichen senkrecht zu der Längsachse der Hauptbürsten (2, 3) ausgerichtete Schiene (39) aufweist, und dass ein Gewichtglied (40) entlang der Schiene (39) steuerbar gleitbar ist, oder dass eine Flüssigkeitspumpe zum Pumpen von Flüssigkeit zwischen Behälter oder Reservoiren auf dem Hauptrahmen als Reaktion auf einem Ungleichgewicht in der Vorrichtung bereitgestellt ist.

## Revendications

1. Dispositif pour le nettoyage des objets longs, particulièrement des pales d'éoliennes, dans lequel ledit dispositif comprend deux dispositifs de balais principaux espacés (2,3), une zone de lavage (4) est définie entre lesquels dispositifs de balais principaux (2,3), chaque dispositif de balais (2,3) présente une forme sensiblement cylindrique ayant un axe longitudinal, et étant apte à tourner autour dudit axe longitudinal, le dispositif est **caractérisé en ce que** chaque dispositif de balais (2,3) est fixé à une extrémité à un cadre intermédiaire (23), et que la fixation comprend un moyen d'articulation permettant le dispositif de balais à pivoter dans un premier plan, et des moyens de contrôle de pivotement comprenant un vérin (11,12) de telle manière que l'angle relatif (15,16) entre l'axe longitudinal des deux dispositifs de balais (2,3) est ajusté, et que la distance entre les deux dispositifs de balais (2,3) est ajustée par un mouvement de glissement (9,10) créé par un deuxième moyen de vérin (5,6) fixé au cadre intermédiaire (23), et que ledit cadre intermédiaire est fixé à un cadre principal, ledit cadre principal (26) comprenant des moyens (27) pour être attachable à un moyens de levage.

2. Dispositif selon la revendication 1, dans lequel un ou plusieurs rouleaux de guidage (35) sont aménagés entre les deux balais principaux (2,3) adjacents au cadre intermédiaire (23), les rouleaux de guidage peuvent roter autour d'un axe agencé dans le même plan que le premier plan de pivotement des balais principaux.

3. Dispositif selon la revendication 1, dans lequel un ou plusieurs balais secondaires (17) sont disposés adjacents au cadre intermédiaire (23) entre les deux balais principaux (2,3), et que les balais secondaires (17) peuvent tourner autour d'un axe agencé dans le même plan que le premier plan de pivotement des balais principaux mais de façon sensiblement perpendiculaire auxdits balais principaux.

4. Dispositif selon la revendication 1, dans lequel un élément de poutre (18) est aménagé en parallèle avec l'axe longitudinal de chaque balai principal (2,3), ledit élément de poutre (18) s'étendant essentiellement le long du balai principal (2,3), et qu'un ou plusieurs moyens de détecteur (21) sont aménagés le long de chaque élément de poutre pour registrer la distance entre l'élément de poutre (18) et un objet à nettoyer aménagé entre les deux balais principaux.

5. Dispositif selon la revendication 1 ou 4, dans lequel une ou plusieurs buses (20) peuvent être aménagées le long des balais principaux (2,3), les buses (20) sont destinées à pulvériser des liquides de nettoyage, de solvant d'insecte et/ou de fongosité, les cires chaudes ou froides ou toute autre liquide pulvérisable ou du gaz désirés ou qu'une ou plusieurs buses (20) peuvent être montées dans ou sur l'élément de poutre (18), les buses (20) sont aptes à pulvériser des liquides de nettoyage, de solvant d'insecte et/ou de fongosité, les cires chaudes ou froides ou toute autre liquide pulvérisable ou du gaz désirés.

6. Dipositif selon la revendication 1, 4 ou 5, dans lequel l'élément de poutre (18) peut être équipé d'un rail, et une ou plusieurs buses et/ou un moyen de détecteur (21) par example une photo, un ultrason, et/ou un détecteur infrarouge est réalisé immédiatement adjacent à la buse sur un satellite (22), et que ledit satellite peut se déplacer le long du rail.

7. Dispositif selon l'une quelconque des revendications précédentes, dans lequel une roue de guidage (35) est réalisée et reliée de manière ajustable par des moyens des roulements de roue et une fourche pour chaque balai principal (2,3), ladite roue de guidage peut être manipulée au moyen d'un ou plusieurs vérins afin d'engager un objet positionné entre les deux balais principaux pour le nettoyer, quelque soit la distance vis-à-vis de l'axe longitudinale du balai principal.

8. Dispositif selon l'une quelconque des revendications précédentes, dans lequel les balais principaux (2,3) et le cadre intermédiaire (23) peuvent être disposés sur un châssis (25), et que le châssis (25) comprend en outre un bouclier (31,32) pour chaque balai principal (2,3) apte à recouvrir une bonne partie dudit balai principal, notamment les sections des balais tournées dans le sens contraire de la zone de lavage (4).

9. Dispositif selon la revendication 8, dans lequel des moyens de ventilation et éventuellement des moyens de décharge sont réalisés dans les boucliers pour ventiler et évacuer un éventuel surplus de liquide et/ou de débris et/ou de gaz libéré pendant le lavage.

10. Dispositif selon l'une quelconque des revendications précédentes, dans lequel la puissance pour activer les divers appareils prévus dans le dispositif est fournie comme une pression hydraulique et/ou un courant électrique et/ou une pression pneumatique, et qu'une centrale électrique (36) comprenant des convertisseurs de puissance nécessaires peut être réalisée dans le dispositif.

11. Dispositif selon l'une quelconque des revendications précédentes, dans lequel les moyens de guidage et de détection (21,35), les buses (20), et des vérins (5,6,11,12) ainsi que des moteurs électriques des balais peuvent être contrôlés par des moyens de télécommande avec fil et/ou sans fil, ou comme une combinaison d'instructions contrôlées par l'ordinateur de façon prédéterminée et automatique, par example par une unité PLC en combinaison avec des commandes manuelles.

12. Dispositif selon l'une quelconque des revendications précédentes, dans lequel chaque balai principal comprend une longueur entre 1000 mm et 5000 mm, entre 2500 mm et 4000 mm de préférence, et 3500 mm de plus de préférérence dans la direction longitudinale et comprend un diamètre entre 200 mm et 1000 mm, entre 400 mm et 800 mm de préférence, entre 500 mm et 700 mm de plus de préférence, et que chaque balai est relié à un moyen moteur par engrenage d'entraînement, par example un moteur hydraulique, pneumatique ou électrique, et que l'arbre de chaque balai est fixé de manière pivotante dans un organe de guidage au cadre intermédiaire pour une manipulation dans un plan, et un moyen de vérin est réalisé pour chaque arbre afin de pivoter l'arbre dans ce plan par rapport au cadre intermédiaire dans une direction sensiblement perpendiculaire à l'arbre du balai principal, ledit guidage est contrôlé par un deuxième moyen de vérin.

13. Dispositif selon l'une quelconque des revendications précédentes, dans lequel un système de collecte et/ou de recyclage et/ou de régénération et/ou de tri/classement de qualité de déchet est réalisé pour reconditionnement et/ou réutilisation des liquides ou des gaz collectés pendant le processus de lavage.

14. Dispositif selon l'une quelconque des revendications précédentes, dans lequel un système d'équilibrage (38) est prévu, le système comprend des moyens pour enregistrer un déséquilibre, et ledit système comprend soit un rail (39) réalisé sensiblement perpendiculaire à l'axe longitudinal des balais principaux (2,3), et qu'un élément de poids (40) peut être déplacé de manière contrôlable le long dudit rail (39), soit une pompe à liquide est réalisé pour pomper le liquide entre des conteneurs ou des réservoirs prévus sur le cadre principal en réponse à un déséquilibre dans le dispositif.
